# EUROPEAN PATENT APPLICATION

(11) **EP 2 676 714 A1**
(43) Date of publication of application: **25.12.2013**
(21) Application number: 12747650.5
(22) Date of filing: 14.02.2012
(51) Int. Cl.: B01D 53/04, B65D 81/20, B65D 81/38, F16L 59/02, F16L 59/06

(54) **HEAT INSULATION BOX BODY**

(30) Priority: 14.02.2011 JP 2011028214; 11.04.2011 JP 2011087035; 05.09.2011 JP 2011192683
(71) Applicant: Panasonic Corporation, Osaka 571-8501 (JP)
(72) Inventor: TAKUSHIMA, Tsukasa, Osaka 540-6207 (JP); MIYAJI, Noriyuki, Osaka 540-6207 (JP); UEKADO, Kazutaka, Osaka 540-6207 (JP); KOJIMA, Shinya, Osaka 540-6207 (JP); KOSHIYAMA, Masahiro, Osaka 540-6207 (JP); HASHIDA, Masamichi, Osaka 540-6207 (JP)
(74) Representative: Eisenführ, Speiser & Partner
(86) International application number: PCT/JP2012/000958
(87) International publication number: WO 2012/111311

(57) **Abstract**

A heat-insulating box (1) according to the present invention includes: an outer casing (2); an inner casing (3) accommodated in the outer casing, such that heat insulating space is formed between the inner casing and an inner surface of the outer casing; a plurality of vacuum insulation panels (10) arranged in the heat insulating space; and a foam insulating material (4) which fills space in the heat insulating space other than the plurality of vacuum insulation panels. Each of the plurality of vacuum insulation panels includes at least a core material and a moisture adsorbent, and the core material and the moisture adsorbent are decompression-sealed in space covered by an outer skin material. Among the plurality of vacuum insulation panels, at least a vacuum insulation panel having a largest area includes a gas adsorbing device in addition to the core material and the moisture adsorbent, the gas adsorbing device having nitrogen adsorbing capability and moisture adsorbing capability, and the core material, the moisture adsorbent, and the gas adsorbing device are decompression-sealed in the space covered by the outer skin material.

## Description

### Technical Field

The present invention relates to heat-insulating boxes.

### Background Art

In recent years, energy-saving technologies are attracting attention.
Various products such as refrigerators and vending machines that are produced by using a heat-insulating box including a vacuum insulation panel are on the market and gaining popularity. The vacuum insulation panel is formed in the following manner: a core material formed of, for example, glass wool and an adsorbent are decompression-sealed in an outer skin material having gas barrier capability. The heat insulating performance of such vacuum insulation panels is approximately 20 times as great as the heat insulating performance of conventional urethane foam insulating materials. Therefore, such vacuum insulation panels are attracting attention as an effective tool for saving energy while satisfying customer needs for the interior volume of the heat-insulating box to increase relative to the external dimensions of the heat-insulating box.

However, there are a number of problems in terms of recyclability of a heat-insulating box including such a vacuum insulation panel (including a core material such as glass wool). In conventional recycling systems, if a heat-insulating box including a urethane foam insulating material and a heat-insulating box including a vacuum insulation panel are crushed together, then the urethane foam insulating material and the core material such as glass wool are mixed together after being crushed. As a result, it becomes difficult to solidify the urethane, and thus, recycling of the urethane becomes difficult.

In view of the above, in a preferred heat-insulating box recycling method, before a heat-insulating box including a vacuum insulation panel is crushed, it is necessary to remove the vacuum insulation panel from the heat-insulating box. In this respect, there is proposed a method of readily removing a vacuum insulation panel from a heat-insulating box including both a vacuum insulation panel including a core material such as glass wool and a urethane foam insulating material. The method proposes that the vacuum insulation panel be disposed at a position where the vacuum insulation panel does not come into close contact with the urethane foam insulating material, the position allowing the vacuum insulation panel to be readily reached from the outside of the heat-insulating box for removal (examples of the position include a recess in an inner casing, a recess in an outer casing, a recess in an internal door plate, and a recess in an external door plate). It is disclosed (see Patent Literature 1, for example) that the method facilitates replacement of the vacuum insulation panel alone for maintenance service, and in addition, as with other conventional methods, the method allows heat insulating walls to be thinner, thereby contributing to increase in the interior volume of the heat-insulating box.

### Citation List

### Patent Literature

PTL 1: Japanese Patent No. 3811963

### Summary of Invention

### Technical Problem

The above conventional structure facilitates the removal of the vacuum insulation panel from the heat-insulating box. However, for example, as compared to a case where the vacuum insulation panel is embedded within the urethane foam insulating material (e.g., a technique disclosed in the Prior Art section of Patent Literature 1), the shape of the outer casing or inner casing of the heat-insulating box becomes complex. This results in an increase in the production cost of the heat-insulating box, and also causes a decrease in the strength of the heat-insulating box. In addition, such a structure tends to allow external gas to enter the vacuum insulation panel from the outside of the heat-insulating box. As a result, degradation in the heat insulating performance of the vacuum insulation panel occurs at an early stage, which consequently causes degradation in energy saving performance, leading to environmental degradation such as an increase in carbon dioxide emission due to an increase in power consumption.

In a case where a core material formed of, for example, glass wool is used in a vacuum insulation panel, the glass surface which contains alkali oxides such as soda lime comes into contact with water that enters the vacuum insulation panel over time, and thereby alkali ions from the glass surface are selectively dissolved into the water. Accordingly, a Si-OH-rich layer is formed on the glass surface, and a hydroxy group (-OH) concentration in the water increases due to the alkali ion dissolution. If the PH becomes 9 or higher, there is a possibility that a Si-O-Si bond is broken and thereby degradation of the vacuum insulation panel is facilitated.

The present invention has been made to solve the above conventional problems. The present invention is directed to a case where a heat-insulating box is formed by using a vacuum insulation panel in which a core material formed of, for example, glass wool is used, and an object of the present invention is to suppress degradation of the vacuum insulation panel due to gas and moisture that enter the heat-insulating box during its use, and to improve the recyclability of the vacuum insulation panel. In other words, an object of the present invention is to maintain the heat insulating performance of the heat-insulating box by means of the vacuum insulation panel for a long term during the use of the heat-insulating box, and to improve the recyclability of the vacuum insulation panel of the heat-insulating box at the time of disposal of the used heat-insulating box.

### Solution to Problem

In order to achieve the above object, a heat-insulating box according to one aspect of the present invention includes: an outer casing; an inner casing accommodated in the outer casing, such that heat insulating space is formed between the inner casing and an inner surface of the outer casing; a plurality of vacuum insulation panels arranged in the heat insulating space; and a foam insulating material which fills space in the heat insulating space other than the plurality of vacuum insulation panels. Each of the plurality of vacuum insulation panels includes at least a core material and a moisture adsorbent, and the core material and the moisture adsorbent are decompression-sealed in space covered by an outer skin material. Among the plurality of vacuum insulation panels, at least a vacuum insulation panel having a largest area includes a gas adsorbing device in addition to the core material and the moisture adsorbent, the gas adsorbing device having nitrogen adsorbing capability and moisture adsorbing capability, and the core material, the moisture adsorbent, and the gas adsorbing device are decompression-sealed in the space covered by the outer skin material.

According to the above structure, the gas adsorbing device included in the vacuum insulation panel adsorbs moisture entering the vacuum insulation panel during the use of the heat-insulating box. Therefore, at the time of disposal of the used heat-insulating box, the core material removed from the vacuum insulation panel of the heat-insulating box is in a state where the core material is not significantly affected by weathering and degradation due to moisture, and thus the initial performance is maintained. Since degradation of the core material and the vacuum insulation panel is suppressed during the use of the heat-insulating box, the heat insulating performance of the heat-insulating box can be maintained for a long term. Moreover, since degradation of the core material and the vacuum insulation panel is suppressed, the core material and the vacuum insulation panel can be readily recycled at the time of disposal of the used heat-insulating box.

In order to achieve the above object, the gas adsorbing device included in the heat-insulating box according to another aspect of the present invention includes: a gas adsorbent having nitrogen adsorbing capability and moisture adsorbing capability; and a sealed pouch in which the gas adsorbent is packed, the sealed pouch having gas permeability. The gas adsorbent includes: a copper-ion-exchanged ZSM-5 zeolite in which a silica-alumina ratio in a zeolite framework is not less than 8 and not more than 25; and a chemical moisture adsorbent surrounding the copper-ion-exchanged ZSM-5 zeolite, the chemical moisture adsorbent being more active in adsorbing water than the copper-ion-exchanged ZSM-5 zeolite.

According to the above structure, the chemical moisture adsorbent surrounding the copper-ion-exchanged ZSM-5 zeolite comes into contact with steam (moisture) before the copper-ion-exchanged ZSM-5 zeolite does, thereby adsorbing and immobilizing the steam (moisture). The chemical moisture adsorbent is more active in adsorbing water than the copper-ion-exchanged ZSM-5 zeolite. Accordingly, the amount of steam (moisture) that reaches the copper-ion-exchanged ZSM-5 zeolite through gaps of the chemical moisture adsorbent without being adsorbed by the chemical moisture adsorbent is small. Therefore, the adsorption activity of the copper-ion-exchanged ZSM-5 zeolite is not lost due to steam (moisture). Thus, decrease in the nitrogen adsorption activity of the copper-ion-exchanged ZSM-5 zeolite can be suppressed. As a result, during the use of the heat-insulating box, degradation in the nitrogen adsorption performance of the copper-ion-exchanged ZSM-5 zeolite of the gas adsorbing device is suppressed, and consequently, degradation of the core material decompression-sealed in the outer skin material together with the gas adsorbing device is suppressed, which makes it possible to maintain the heat insulating performance of the heat-insulating box for a long term. Since degradation of the gas adsorbing device, the core material, and the vacuum insulation panel is suppressed, the core material and the vacuum insulation panel can be readily recycled at the time of disposal of the used heat-insulating box.

Further, according to the above structure, since the gas adsorbent is packed in the pouch having suitable gas permeability, the concentration of steam entering the vacuum insulation panel over time is low, and almost all of the entering steam is selectively adsorbed by the chemical moisture adsorbent and thus immobilized, which consequently allows the copper-ion-exchanged ZSM-5 zeolite of the gas adsorbing device to maintain high nitrogen adsorption activity for a long term. Therefore, the vacuum insulation panel does not degrade for a long term. As a result, the core material and the vacuum insulation panel can be more readily recycled at the time of disposal of the used heat-insulating box.

In order to achieve the above object, the gas adsorbing device included in the heat-insulating box according to yet another aspect of the present invention includes: a powdery gas adsorbing material having nitrogen adsorbing capability and moisture adsorbing capability; and a long and narrow flattened cylindrical metal storage container storing the gas adsorbing material in a decompressed state, the storage container including a storage portion and sealed portions positioned at both ends of the storage portion. A closely contacting portion where mutually facing inner surfaces of the storage container are in close contact with each other is formed between the storage portion and at least one of the sealed portions of the storage container.

Since the above structure includes the closely contacting portion, the powdery gas adsorbing material stored in the storage portion is prevented from being scattered when a sealed portion is opened. Therefore, recyclability of the vacuum insulation panel at the time of disposal of the used heat-insulating box is improved.

The above object, other objects, features, and advantages of the present invention will be made clear by the following detailed description of preferred embodiments with reference to the accompanying drawings.

### Advantageous Effects of Invention

According to the present invention, at the time of disposal of the used heat-insulating box, the vacuum insulation panel collected from the heat-insulating box is in a state where the vacuum insulation panel is not significantly affected by weathering and degradation due to moisture. Therefore, the vacuum insulation panel can be recycled with its initial performance maintained, which makes it possible to provide environmentally-friendly resource-saving refrigerators.

### Brief Description of Drawings

[Fig. 1] Fig. 1 is a front view of a heat-insulating box according to Embodiment 1 of the present invention.
[Fig. 2] Fig. 2 is a transverse sectional view of the heat-insulating box according to Embodiment 1 of the present invention.
[Fig. 3] Fig. 3 is a cross-sectional view showing a vacuum insulation panel according to Embodiment 1 of the present invention.
[Fig. 4] Fig. 4 is a plan view of the vacuum insulation panel according to Embodiment 1 of the present invention seen from an adhesive side.
[Fig. 5] Fig. 5 shows moisture adsorption amounts at different water adsorption equilibrium pressures according to Embodiment 1 of the present invention.
[Fig. 6] Fig. 6 is a schematic diagram of a gas adsorbent according to Embodiment 2 of the present invention.
[Fig. 7] Fig. 7 is a schematic diagram of a gas adsorbent pack according to Embodiment 3 of the present invention.
[Fig. 8] Fig. 8 is a plan view showing an example of the structure of a gas adsorbing device according to Embodiment 4 of the present invention.
[Fig. 9] Fig. 9 is a cross-sectional view taken along line A-A in Fig. 8.
[Fig. 10] Fig. 10 is a plan view showing an example of the structure of a gas adsorbing device according to Embodiment 5 of the present invention.
[Fig. 11] Fig. 11 is a cross-sectional view taken along line B-B in Fig. 10.
[Fig. 12] Fig. 12 is a cross-sectional view taken along line C-C in Fig. 10.

### Description of Embodiments

Hereinafter, embodiments of the present invention will be described with reference to the accompanying drawings. In the drawings, the same or corresponding components are denoted by the same reference signs, and a repetition of the same description is avoided if no particular reference is made to such components.

A first aspect of the present invention is a heat-insulating box including: an outer casing; an inner casing accommodated in the outer casing, such that heat insulating space is formed between the inner casing and an inner surface of the outer casing; a plurality of vacuum insulation panels arranged in the heat insulating space; and a foam insulating material which fills space in the heat insulating space other than the plurality of vacuum insulation panels. Each of the plurality of vacuum insulation panels includes at least a core material and a moisture adsorbent, and the core material and the moisture adsorbent are decompression-sealed in space covered by an outer skin material. Among the plurality of vacuum insulation panels, at least a vacuum insulation panel having a largest area includes a gas adsorbing device in addition to the core material and the moisture adsorbent, the gas adsorbing device having nitrogen adsorbing capability and moisture adsorbing capability, and the core material, the moisture adsorbent, and the gas adsorbing device are decompression-sealed in the space covered by the outer skin material.

It should be noted that, in the present invention, glass wool (glass fiber), an open-cell foam such as polyurethane or polystyrene, an inorganic fiber such as a ceramic fiber, an organic fiber such as a polyester fiber, and inorganic powder such as silica or pearlite are usable as the "core material". Alternatively, a composite of these materials may be used as the "core material".

The "outer skin material" may be any material, so long as the material serves to maintain the degree of vacuum of the vacuum insulation panel. For example, the outer skin material may be laminated films in which the following films are laminated together: a thermal bonding film serving as an innermost layer; a resin film which is a gas barrier film serving as a middle layer, on which a metal foil or metal atoms are vapor-deposited; and a surface protection film serving as an outermost layer. It should be noted that the thermal bonding film to be used is not particularly limited, but may be a thermoplastic resin film such as a low-density polyethylene film, a straight-chain low-density polyethylene film, a high-density polyethylene film, a polypropylene film, or a polyacrylonitrile film, or may be a composite of these films. Examples of the gas barrier film include: a metal foil such as an aluminum foil or a copper foil; a film obtained by vapor-depositing a metal such as aluminum or copper on a polyethylene terephthalate film or an ethylene-vinyl alcohol copolymer; and a film obtained by vapor-depositing a metal oxide such as aluminum oxide or copper oxide on a polyethylene terephthalate film or an ethylene-vinyl alcohol copolymer.

As described above, the vacuum insulation panel includes: the core material; the moisture adsorbent; and the gas adsorbing device having nitrogen adsorbing capability and moisture adsorbing capability, the gas adsorbing device being decompression-sealed together with the core material and the moisture adsorbent. Accordingly, air and moisture entering from the outside of the vacuum insulation panel can be adsorbed by the moisture adsorbent and the gas adsorbing device. In addition, degradation of the gas adsorbing device due to moisture adsorption can be suppressed by the moisture adsorbent. In other words, in a high water adsorption equilibrium pressure range, degradation of the gas adsorbing device due to moisture adsorption can be suppressed by the moisture adsorbent, and in a low water adsorption equilibrium pressure range, a trace amount of moisture can be adsorbed for a long term. As a result, the decompressed state of the vacuum insulation panel can be readily maintained, and high heat insulating performance of the vacuum insulation panel can be maintained for a long term. Since the vacuum insulation panel is maintained to be in a dry state during its use, the core material is suppressed from being weather worn. Therefore, at the time of disposal of the heat-insulating box, degradation in the performance of the core material removed from the vacuum insulation panel is small, and the core material can be readily recycled for use in a new vacuum insulation panel.

The vacuum insulation panels are arranged in the heat insulating space formed by the outer casing and the inner casing. Of the heat insulating space, space other than the vacuum insulation panels is filled with the foam insulating material. As a result, for example, compared to a case where the vacuum insulation panels are arranged outside the heat insulating space, air and moisture are less likely to enter the inside of each vacuum insulation panel. This makes it possible to suppress degradation in the heat insulating performance of the vacuum insulation panel due to internal pressure increase of the vacuum insulation panel.

In a second aspect of the present invention, the gas adsorbing device includes: a powdery gas adsorbing material having nitrogen adsorbing capability and moisture adsorbing capability; and a storage container configured to store the gas adsorbing material. The storage container and the core material are held in the space covered by the outer skin material not via an adhesive but via decompression sealing.

It should be noted that, in the present invention, the "storage container" serves to store the gas adsorbing material in a decompressed state. Although the type of the storage container is not particularly limited, for example, a metal material such as aluminum, copper, iron, or stainless steel may be used as a material for forming the storage container. The "gas adsorbing material" may be any material, so long as the material is capable of adsorbing nitrogen and oxygen in air and capable of adsorbing moisture in air. Although the type of the gas adsorbing material is not particularly limited, for example, a lithium compound or a copper-ion-exchanged ZSM-5 zeolite may be used as the gas adsorbing material.

According to the above structure, the core material and the gas adsorbing device are not adhered to each other via an adhesive or the like, but are decompression-sealed within the outer skin material with no use of an adhesive. As a result, at a time when the core material is removed from the vacuum insulation panel, the core material with no impurity adhered thereto can be removed with its heat insulating performance maintained. Thus, the core material and the vacuum insulation panel can be readily recycled.

In a third aspect of the present invention, each vacuum insulation panel is adhered to the inner surface of the outer casing or an outer surface of the inner casing via an adhesive. An outer periphery of the vacuum insulation panel along edges of a core material part of the vacuum insulation panel is firmly adhered to the inner surface of the outer casing or the outer surface of the inner casing via the adhesive to prevent an occurrence of the following situation: when an adhesion surface of the inner surface of the outer casing or the outer surface of the inner casing to which the vacuum insulation panel is to be adhered, and a central portion of the vacuum insulation panel away from the edges of the core material part of the vacuum insulation panel by a predetermined width or more, are not adhered together, the foam insulating material enters a gap between the adhesion surface and the central portion of the vacuum insulation panel.

Accordingly, the vacuum insulation panel can be collected more easily without damaging the vacuum insulation panel as compared to the following cases: a case where the vacuum insulation panel is embedded within the foam insulating material at a position near the middle between the outer casing and the inner casing; and a case where almost one entire surface of the core material part of the vacuum insulation panel is adhered to the inner surface of the outer casing or the outer surface of the inner casing via an adhesive. That is, at the time of disposal of the used heat-insulating box, the vacuum insulation panel can be readily collected from the heat-insulating box. Thus, a heat-insulating box with improved recyclability can be provided. In a fourth aspect of the present invention, the adhesive is a thermal expansion adhesive. A thermal expansion adhesive has such a property that after the adhesive has expanded under a high temperature and the adhesive strength is lost, when the adhesive is cooled down to a normal temperature, the expanded state of the adhesive is still maintained. Accordingly, under a normal temperature, the vacuum insulation panel can be readily removed from the outer casing or inner casing, to which the vacuum insulation panel is adhered.

In a fifth aspect of the present invention, the gas adsorbing device includes: a gas adsorbent having nitrogen adsorbing capability and moisture adsorbing capability; and a sealed pouch in which the gas adsorbent is packed, the sealed pouch having gas permeability. The gas adsorbent includes: a copper-ion-exchanged ZSM-5 zeolite in which a silica-alumina ratio in a zeolite framework is not less than 8 and not more than 25; and a chemical moisture adsorbent surrounding the copper-ion-exchanged ZSM-5 zeolite, the chemical moisture adsorbent being more active in adsorbing water than the copper-ion-exchanged ZSM-5 zeolite.

It should be noted that, in the present invention, for example, a low-density polyethylene film or a polypropylene film may be used as the "sealed pouch having suitable gas permeability". Alternatively, holes may be formed in such a film so as to allow the entry of a trace amount of gas through the holes, and thereby gas barrier performance may be adjusted. Further alternatively, a non-woven fabric may be used as the sealed pouch. Examples of the non-woven fabric include: a non-woven fabric formed by heating and spreading a polyester fiber and a polypropylene fiber; and a non-woven fabric formed by span bonding. The term "suitable gas permeability" indicates that the film to be used as the sealed pouch can be selected in accordance with the amount of residual moisture. In a case where the amount of residual moisture is large, a film material with low steam permeability is selected. In a case where the amount of residual moisture is small, a film material with high steam permeability is selected. It is preferable to select a film such that the film has as high gas permeability as possible. The film's steam permeability and nitrogen permeability determine the gas barrier performance of the film. The thickness of the film may be set in accordance with the gas barrier performance to be obtained. The chemical moisture adsorbent may be placed in various ways. For example, the chemical moisture adsorbent may be placed to be in contact with an outer shell, or may be placed in the middle of the core material. Among the various ways of placing the chemical moisture adsorbent, one preferable way is to place the chemical moisture adsorbent in the middle of the core material.

The copper-ion-exchanged ZSM-5 zeolite, in which the silica-alumina ratio in the zeolite framework is not less than 8 and not more than 25, is prepared in a method described below.

First, a sodium-type zeolite in which a silica-alumina ratio in the zeolite framework is not less than 8 and not more than 25 is subjected to copper ion exchange. The copper ion exchange may be performed in a conventional known method. Commonly used methods involve immersing the sodium-type zeolite in an aqueous solution of a soluble copper salt such as a copper chloride solution or an ammino acid copper solution. Among such methods, if the ZSM-5 zeolite is prepared by a method using a carboxylate-containing Cu2+ solution such as a copper(II) propionate solution or a copper(II) acetate solution, or a method using a copper(II) nitrate solution, then the ZSM-5 zeolite has high nitrogen adsorption activity.

The copper ion exchange rate is desirably at least 50 (%) of the amount of exchangeable ions. After being subjected to the copper ion exchange, the ZSM-5 zeolite is sufficiently washed by water and dried, and thereafter subjected to suitable heat treatment under reduced pressure. As a result, Cu2+ introduced by the copper ion exchange is reduced to Cu1+. Consequently, nitrogen adsorbing capability is obtained. The heat treatment is performed under a pressure of 10 (mPa) or lower and preferably 1 (mPa) or lower at a temperature of 350 °C or higher and preferably 500 °C or higher.

The gas adsorbent according to the present invention is formed in a method described below.

The heat-treated copper-ion-exchanged ZSM-5 zeolite, in which the silica-alumina ratio in the zeolite framework is not less than 8 and not more than 25 and which is active in adsorbing nitrogen, is mixed with a chemical moisture adsorbent so as to be surrounded by the chemical moisture adsorbent in an inert gas atmosphere such as Ar without coming into contact with nitrogen, water, and oxygen. Here, the chemical moisture adsorbent to be selected for use is one that is more active against water than the previously obtained ZSM-5 zeolite in which the copper ions have been replaced. The greater the difference in the degree of activity against water between the chemical moisture adsorbent and the ZSM-5 zeolite, the better. From the practical standpoint, the difference is preferably twice or more. It should be noted that there is no toxicity information regarding the ZSM-5 zeolite supporting monovalent copper ions, and the ZSM-5 zeolite supporting monovalent copper ions is considered to be environmentally friendly.

According to the above structure, the chemical moisture adsorbent surrounding the copper-ion-exchanged ZSM-5 zeolite comes into contact with steam (moisture) before the copper-ion-exchanged ZSM-5 zeolite does, thereby adsorbing and immobilizing the steam (moisture). Further, the chemical moisture adsorbent is more active in adsorbing water than the copper-ion-exchanged ZSM-5 zeolite. Accordingly, the amount of steam (moisture) that reaches the copper-ion-exchanged ZSM-5 zeolite through gaps of the chemical moisture adsorbent without being adsorbed by the chemical moisture adsorbent can be made small. Therefore, the adsorption activity of the copper-ion-exchanged ZSM-5 zeolite is not easily lost due to steam (moisture). Thus, decrease in the nitrogen adsorption activity of the copper-ion-exchanged ZSM-5 zeolite can be suppressed. As a result, during the use of the heat-insulating box, degradation in the nitrogen adsorption performance of the copper-ion-exchanged ZSM-5 zeolite of the gas adsorbing device is suppressed, and consequently, degradation of the core material decompression-sealed in the outer skin material together with the gas adsorbing device is suppressed, which makes it possible to maintain the heat insulating performance of the heat-insulating box for a long term. Since degradation of the gas adsorbing device, the core material, and the vacuum insulation panel is suppressed, the core material and the vacuum insulation panel can be more readily recycled at the time of disposal of the used heat-insulating box.

Further, according to the above structure, the copper-ion-exchanged ZSM-5 zeolite in the gas adsorbent, in which the silica-alumina ratio in the zeolite framework is not less than 8 and not more than 25, is capable of adsorbing nitrogen that cannot be fully removed through an industrial evacuation process. This consequently makes it possible to further improve the heat insulating performance of the vacuum insulation panel during the use of the heat-insulating box.

Still further, according to the above structure, there is not a risk that residual moisture flows into the gas adsorbent at once since the gas adsorbent is packed in the sealed pouch having suitable gas permeability. The degree of activity of the chemical moisture adsorbent against water is higher than the degree of activity of the copper-ion-exchanged ZSM-5 zeolite against water. Accordingly, the amount of residual moisture that reaches the copper-ion-exchanged ZSM-5 zeolite through the chemical moisture adsorbent is significantly small, and decrease in the nitrogen adsorption performance of the copper-ion-exchanged ZSM-5 zeolite can be suppressed. Since degradation of the gas adsorbing device, the core material, and the vacuum insulation panel is suppressed, the core material and the vacuum insulation panel can be more readily recycled at the time of disposal of the used heat-insulating box.

In a sixth aspect of the present invention, the gas adsorbing device includes: a gas adsorbing material having nitrogen adsorbing capability and moisture adsorbing capability; and a long and narrow flattened cylindrical metal storage container storing the gas adsorbing material in a decompressed state, the storage container including a storage portion and sealed portions positioned at both ends of the storage portion. A closely contacting portion where mutually facing inner surfaces of the storage container are in close contact with each other is formed between the storage portion and at least one of the sealed portions of the storage container.

It should be noted that, in the present invention, the "storage container" serves to store the gas adsorbing material in a decompressed state and to form a closely contacting portion in the gas adsorbing device. Although the type of the storage container is not particularly limited, for example, a material such as aluminum, copper, iron, or stainless steel may be used to form the storage container. Further, it is desirable for the storage container to be annealed so that the closely contacting portion can be readily formed. More desirably, the storage container is formed as an aluminum storage container having a thickness of less than 0.5 mm from the standpoint of formability and cost.

Being "sealed" is one way of maintaining the interior of the storage container in a decompressed state. Available methods of realizing the "sealed" state include: a method of filling the inside of the storage container with a bonding member such as a brazing filler metal, adhesive, or glass; a method of joining mutually facing inner surfaces of the storage container by high-frequency welding, ultrasonic welding, or the like; and a method of shaping a bottom by impact pressing, deep-drawing, or the like, such that the inner surfaces of the storage container become continuous with each other.

Since the above structure includes the closely contacting portion, the powdery gas adsorbing material stored in the storage portion is prevented from being scattered when a sealed portion is opened. Therefore, recyclability of the vacuum insulation panel at the time of disposal of the used heat-insulating box is improved.

Hereinafter, embodiments of the present invention are described with reference to the drawings. In each embodiment, the same components as those described in a preceding embodiment are denoted by the same reference signs as those used in the preceding embodiment, and a detailed description of such components is omitted. It should be noted that the present invention is not limited by these embodiments.

### (Embodiment 1)

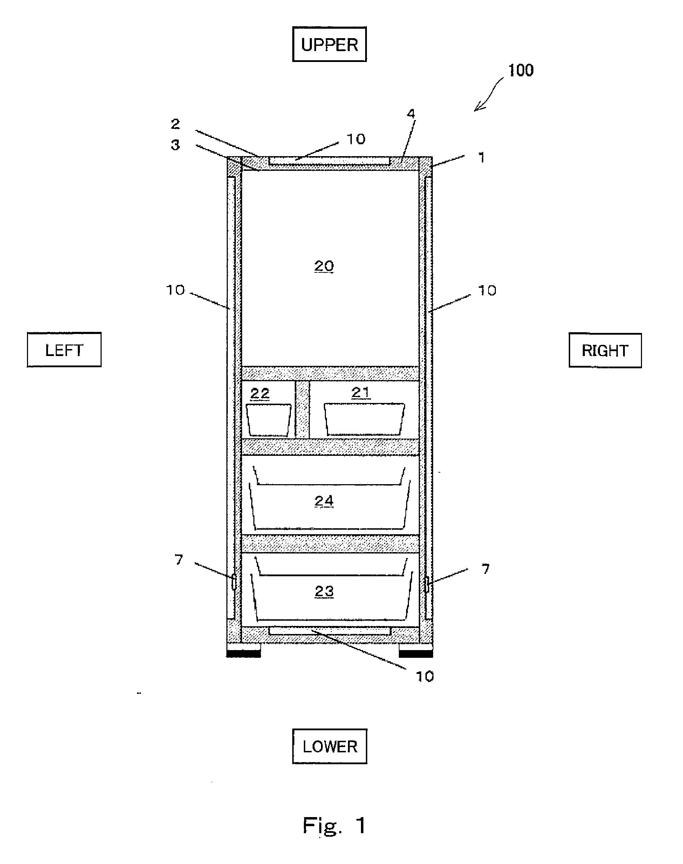

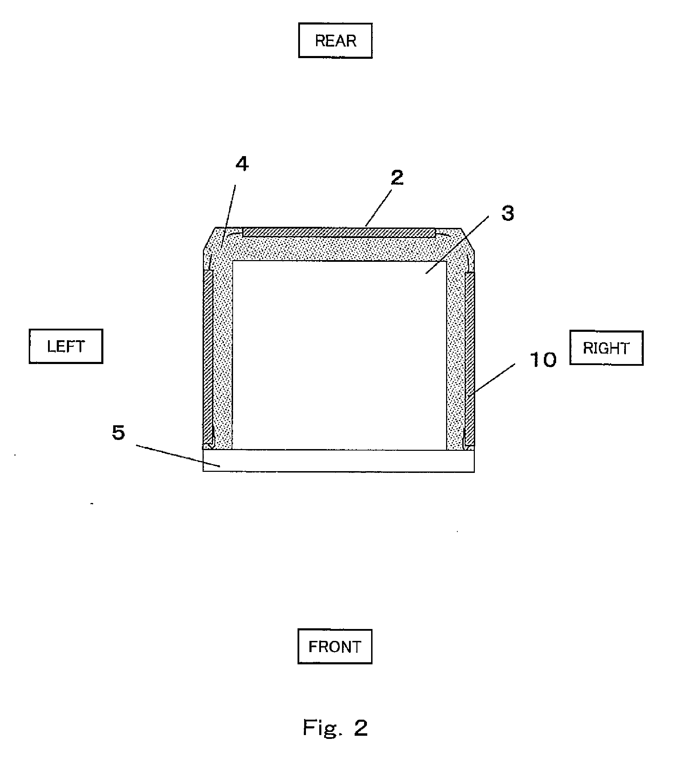

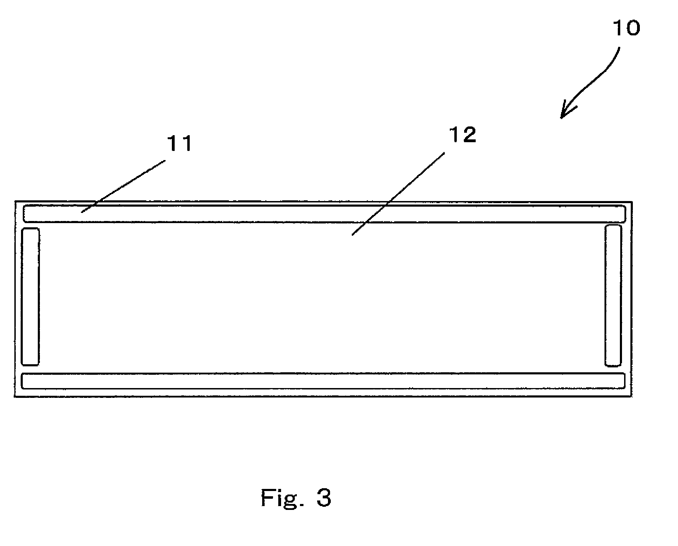

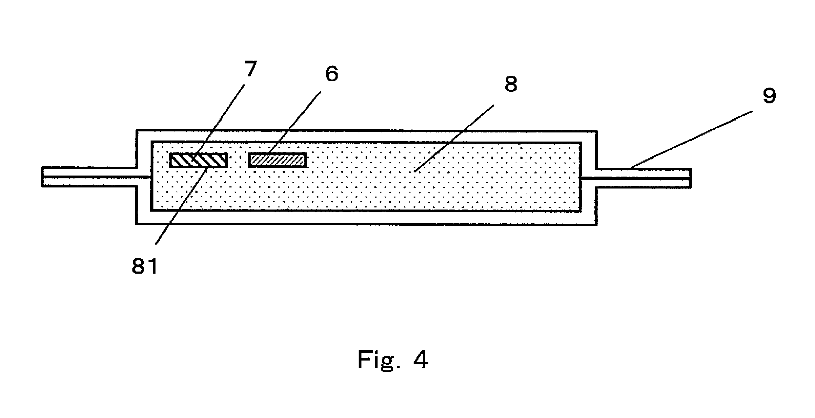

Fig. 1 is a front view of a refrigerator including a heat-insulating box according to Embodiment 1 of the present invention. Fig. 2 is a transverse sectional view of the refrigerator including the heat-insulating box according to Embodiment 1. It should be noted that directions referred to in the description regarding Fig. 1 and Fig. 2 are such that: the height direction of a refrigerator 100 is referred to as a vertical direction; the width direction of the refrigerator 100 is referred to as a horizontal direction; and the depth direction of the refrigerator 100 is referred to as a front-rear direction. Fig. 3 is a cross-sectional view showing a vacuum insulation panel included in the heat-insulating box according to Embodiment 1 of the present invention, the vacuum insulation panel being in a state where fin-folding has not been performed thereon. Fig. 4 is a plan view of the vacuum insulation panel included in the heat-insulating box according to Embodiment 1 seen from an adhesive side, the vacuum insulation panel being in a state where fin-folding has been performed thereon.

As shown in Fig. 1 to Fig. 4, a heat-insulating box 1 according to the present embodiment includes: a metal (e.g., iron plate) outer casing 2 with a front opening; a hard resin (e.g., ABS (Acrylonitrile Butadiene Styrene)) inner casing 3; and a foam insulating material 4 which fills between the outer casing 2 and the inner casing 3, the foam insulating material 4 being formed of rigid urethane foam in which cyclopentane is applied as a foaming agent.

The refrigerator 100, which includes the heat-insulating box 1, includes: a refrigerator compartment 20 provided at the upper part of the body (i.e., the heat-insulating box 1); an upper freezer compartment 21 provided below the refrigerator compartment 20; an ice compartment 22 provided parallel to the upper freezer compartment 21 below the refrigerator compartment 20; a vegetable compartment 23 provided at the lower part of the body; and a lower freezer compartment 24 provided between the vegetable compartment 23 and the upper freezer and ice compartments 21 and 22. It should be noted that the refrigerator compartment 20 includes a swing door 5, which is a single swinging door and which seals the refrigerator compartment 20 such that the refrigerator compartment 20 can be freely opened and closed. The front sides of the upper freezer compartment 21, the ice compartment 22, the lower freezer compartment 24, and the vegetable compartment 23 are sealed by corresponding drawer-type doors, respectively, such that these front sides can be freely opened and closed.

The heat-insulating box 1 includes a plurality of vacuum insulation panels 10. Each of the plurality of vacuum insulation panels 10 includes at least a core material 8 formed of glass wool (glass fiber) and a moisture adsorbent 6 formed of calcium oxide. These components (8, 6) are decompression-sealed in an outer skin material 9 which is formed of, for example, two laminated films having gas barrier capability. It should be noted that the laminated films adopted as the outer skin material 9 may be the following films laminated together: a straight-chain low-density polyethylene film having a thickness of 50 µm and serving as an innermost thermal bonding layer; an aluminum foil having a thickness of 6 µm and serving as a middle gas barrier layer; and two nylon films having a thickness of 15 µm and 25 µm, respectively, and serving as outermost surface protection layers. An aluminum vapor deposition film may be applied as the gas barrier layer, or a combination of an aluminum vapor deposition film and an aluminum foil may be applied as the gas barrier layer.

In particular, among the plurality of vacuum insulation panels 10 included in the heat-insulating box 1, a vacuum insulation panel 10 having the largest area includes a gas adsorbing device 7 in addition to the core material 8 and the moisture adsorbent 6, the gas adsorbing device 7 using a copper-ion-exchanged ZSM-5 zeolite. The gas adsorbing device 7 is decompression-sealed in the outer skin material 9 together with the core material 8 and the moisture adsorbent 6. The ZSM-5 zeolite adopted as a gas adsorbing material of the gas adsorbing device 7 is known to have high nitrogen adsorbing capability and high moisture adsorbing capability. It should be noted that not only the largest-area vacuum insulation panel 10 but also several larger-area panels among the plurality of vacuum insulation panels 10 (including the largest-area vacuum insulation panel 10) may include the core material 8, the moisture adsorbent 6, and the gas adsorbing device 7, which are decompression-sealed in the outer skin material 9. It should be noted that it will suffice if at least the largest-area vacuum insulation panel 10 includes the gas adsorbing device 7 decompression-sealed in the outer skin material 9 together with the core material 8 and the moisture adsorbent 6.

The gas adsorbing device 7 is formed in such a manner that the gas adsorbing material, in which the powdery ZSM-5 zeolite is used, is sealed in a metal storage container 81. After the gas adsorbing device 7 is decompression-sealed in the outer skin material 9 together with the core material 8 and the moisture adsorbent 6, a through-hole is formed in the storage container 81 by any method such as destruction using external force, and thereby the inner space of the storage container 81 is in communication with space that is inside the outer skin material 9 and outside the storage container 81.

In the heat-insulating box 1 according to the present embodiment, in a state where each vacuum insulation panel 10 is adhered to the inner surface of the outer casing 2 via an adhesive 11, the space formed by the outer casing 2 and the inner casing 3 is filled with the foam insulating material 4. A hot melt adhesive or a thermal expansion adhesive may be applied as the adhesive 11. For example, AZ7785 available from Asahi Chemical Synthetic Co., Ltd. may be used as a hot melt adhesive. Alternatively, a urethane-based or EVA (Ethylene Vinyl Acetate)-based hot melt adhesive may be applied as the adhesive 11. In this case, however, a time from when the adhesive 11 is applied onto the vacuum insulation panel 10 to when the vacuum insulation panel 10 is affixed to the outer casing 2 is different. After the adhesive 11 is applied onto the vacuum insulation panel 10, the adhesive 11 may be covered by a release paper. In this manner, the initial adhesiveness of the adhesive 11 can be maintained. It should be noted that the adhesive 11 is applied in a dot-like manner or in both a dot-like manner and linear manner. The adhesive 11 is used for affixing the vacuum insulation panel 10 to the inner surface of the outer casing 2 or the outer surface of the inner casing 3 to temporarily fix the vacuum insulation panel 10 until the foam insulating material 4 forms and fills the intended space. The area of the application of the adhesive 11 is less than or equal to 10 % of the area of one surface of a core material part 12 of the vacuum insulation panel 10.

In particular, the outer periphery of the vacuum insulation panel 10 along edges of the core material part 12 (i.e., a part where the core material 8 is present between two laminated films (of the outer skin material 9)) is firmly adhered to the inner surface of the outer casing 2 via the adhesive 11. The reason for this is to prevent an occurrence of the following situation: when an adhesion surface of the inner surface of the outer casing 2 to which the vacuum insulation panel 10 is to be adhered, and a central portion of the vacuum insulation panel 10 away from the edges of the core material part 12 of the vacuum insulation panel 10 by a predetermined width or more, are not adhered together, the foam insulating material 4 enters a gap between the adhesion surface of the outer casing 2 to which the vacuum insulation panel 10 is to be adhered and the central portion of the vacuum insulation panel 10.

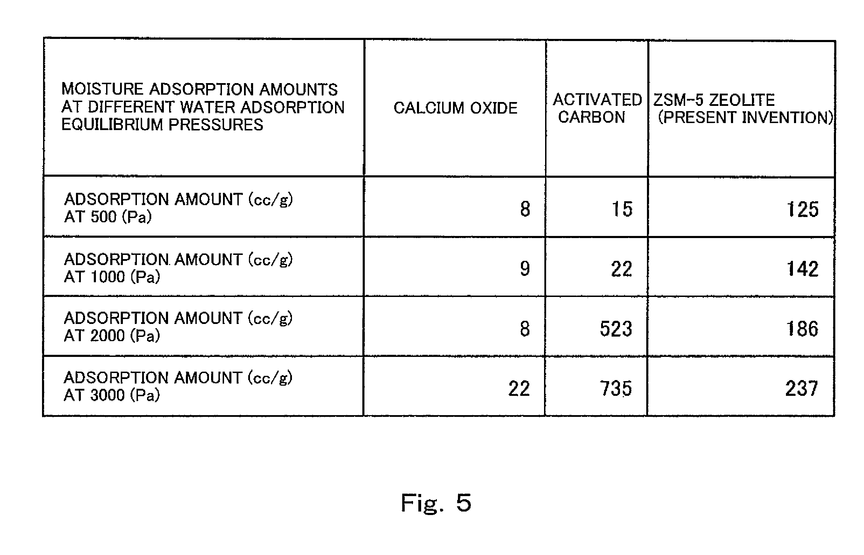

Fig. 5 illustrates a comparison between the amount of moisture adsorbed by the ZSM-5 zeolite included in the vacuum insulation panel of the heat-insulating box according to the present embodiment and the amount of moisture adsorbed by other moisture adsorbents at different water adsorption equilibrium pressures. It should be noted that, in the ZSM-5 zeolite showing numerical values in Fig. 5, 60 % or more of the copper sites are monovalent copper sites, and 70 % or more of the monovalent copper sites are monovalent copper sites with three-coordinate oxygen atoms.

Fig. 5 shows moisture adsorption amounts of respective moisture adsorbents at different water adsorption equilibrium pressures lower than 13200 (Pa) which is the atmospheric pressure. Among the moisture adsorption amounts at the different water adsorption equilibrium pressures lower than the atmospheric pressure, if the moisture adsorption amounts at 3000 (Pa) are looked at, the moisture adsorption amount of activated carbon is the greatest, which is 735 (cc/g). It is understood from Fig. 5 that activated carbon maintains a high moisture adsorption amount exceeding 500 (cc/g) even under a decompressed state of 2000 (Pa).

Meanwhile, in a decompressed state of 2000 (Pa) or higher, the ZSM-5 zeolite adopted as a gas adsorbing material in the present embodiment exhibits a moisture adsorption amount significantly less than that of activated carbon. However, at a water adsorption equilibrium pressure lower than or equal to 1000 (Pa), at which the degree of vacuum is high, the ZSM-5 zeolite exhibits a moisture adsorption amount exceeding 100 (cc/g). In particular, even at 500 (Pa) at which the degree of vacuum is higher than that at 1000 (Pa), the ZSM-5 zeolite maintains a moisture adsorption amount exceeding 100 (cc/g).

Generally speaking, the water adsorption equilibrium pressure of a vacuum insulation panel applied in a refrigerator is 500 (Pa) or lower even after the refrigerator has been used for ten years. Particularly in the case of an actual product, even after the refrigerator has been used for ten years, the core material is maintained to be in a dry state, such that the water adsorption equilibrium pressure is lower than or equal to 100 (Pa). Therefore, if the gas adsorbing device using the ZSM-5 zeolite according to the present embodiment is included in a refrigerator vacuum insulation panel having a high degree of vacuum, then it becomes possible to readily adsorb moisture contained in air in addition to nitrogen which accounts for a large portion of the air even at a water adsorption equilibrium pressure at which the degree of vacuum is high. It is desirable that the dry state of the core material be maintained such that the water adsorption equilibrium pressure is lower than or equal to 200 (Pa) even in the case of being affected by external disturbances. This makes it possible to maintain the initial performance while being barely affected by the weathering of the glass wool (core material).

In the above structure, the gas adsorbing device 7 is decompression-sealed in the vacuum insulation panel 10 together with the core material 8 and the moisture adsorbent 6. This makes it possible to adsorb air and moisture entering from the outside of the vacuum insulation panel 10 by means of the moisture adsorbent 6 and the gas adsorbing device 7, and also to suppress degradation of the gas adsorbing device 7 due to moisture adsorption by means of the moisture adsorbent 6. As a result, the decompressed state can be maintained for a long term, and high heat insulating performance of the vacuum insulation panel 10 can be maintained for a long term.

The vacuum insulation panels 10 are arranged in the space formed by the outer casing 2 and the inner casing 3. Of the space formed by the outer casing 2 and the inner casing 3, space other than the vacuum insulation panels 10 is filled with the foam insulating material 4. As a result, compared to a case where the vacuum insulation panels 10 are arranged outside the space formed by the outer casing 2 and the inner casing 3, air and moisture are less likely to enter the inside of each vacuum insulation panel 10. Consequently, internal pressure increase of the vacuum insulation panel 10 due to entry of air and moisture into the vacuum insulation panel 10, and degradation in the heat insulating performance of the vacuum insulation panel 10 due to such internal pressure increase, are less likely to occur.

As described above, the gas adsorbing device 7 using the ZSM-5 zeolite as a gas adsorbing material is decompression-sealed in the vacuum insulation panel 10 together with the core material 8 and the moisture adsorbent 6. This makes it possible to adsorb air and moisture entering from the outside of the vacuum insulation panel 10 not only by the moisture adsorbent 6 but also by the ZSM-5 zeolite of the gas adsorbing device 7. In particular, in a high water adsorption equilibrium pressure range, degradation of the gas adsorbing device 7 due to moisture adsorption can be suppressed by the moisture adsorbent 6. Meanwhile, in a low water adsorption equilibrium pressure range, a trace amount of moisture can be adsorbed for a long term. As a result, the decompressed state can be readily maintained, and high heat insulating performance of the vacuum insulation panel 10 can be maintained for a long term. Since the vacuum insulation panel 10 is maintained to be in a dry state during its use, the core material 8 formed of, for example, glass wool is suppressed from being weather worn. Therefore, at the time of disposal of the heat-insulating box, degradation in the performance of the core material 8 removed from the vacuum insulation panel 10 is suppressed, and the core material 8 can be readily recycled for use in a new vacuum insulation panel.

The vacuum insulation panel 10 is adhered to the inner surface of the outer casing 2 or the outer surface of the inner casing 3 via the adhesive 11. In particular, the outer periphery of the vacuum insulation panel 10 along edges of the core material part 12 (i.e., a part where the core material 8 is present between the laminated films at both surfaces) is firmly adhered to the inner surface of the outer casing 2 or the outer surface of the inner casing 3 via the adhesive 11 to prevent an occurrence of the following situation: when an adhesion surface of the inner surface of the outer casing 2 or the outer surface of the inner casing 3 to which the vacuum insulation panel 10 is to be adhered, and a central portion of the vacuum insulation panel 10 away from the edges of the core material part 12 of the vacuum insulation panel 10 by a predetermined width or more, are not adhered together, the urethane foam insulating material 4 enters a gap between the adhesion surface and the central portion of the vacuum insulation panel 10. Accordingly, the vacuum insulation panel 10 can be collected more easily without damaging the vacuum insulation panel 10 as compared to the following cases: a case where the vacuum insulation panel 10 is embedded within the foam insulating material 4 at a position near the middle between the outer casing 2 and the inner casing 3; and a case where almost one entire surface of the core material part 12 of the vacuum insulation panel 10 is adhered to the inner surface of the outer casing 2 or the outer surface of the inner casing 3 via the adhesive 11.

The core material 8 (particularly glass wool) of the vacuum insulation panel 10 is known to be weather worn due to entry of air. Internal pressure increase caused by the entry of air is less in the vacuum insulation panel 10 whose area is large owing to a large volume of the core material 8 therein than in the vacuum insulation panel 10 whose area is small owing to a small volume of the core material 8 therein. That is, aging degradation does not easily occur in the vacuum insulation panel 10 whose area is large. In view of this, in the present embodiment, the largest-area vacuum insulation panel 10 includes the gas adsorbing device 7. Accordingly, the weathering of the core material 8 such as glass wool can be prevented. In particular, even in a case where the vacuum insulation panel 10 is recycled after its long-term use of, for example, ten years, the weathering of the core material 8 is still suppressed. Therefore, recycling using the core material 8 whose heat insulating performance is well maintained is made possible, which improves the recyclability.

Further, in the present embodiment, the core material 8 such as glass wool and the gas adsorbing device 7 are not adhered to each other via the adhesive 11. The core material 8 and the gas adsorbing device 7 are decompression-sealed within the outer skin material 9 with no use of the adhesive 11. As a result, at the recycling of the vacuum insulation panel 10, the core material 8 and the gas adsorbing device 7 can be readily separated, and the core material 8 with no impurity adhered thereto can be removed from the vacuum insulation panel 10. Therefore, recycling using the core material 8 whose heat insulating performance is well maintained is made possible. Moreover, in the case of breaking the outer skin material 9 to recycle the core material 8 therein, a larger amount of core material 8 can be retrieved with the same man-hours for breaking the outer skin material 9. Thus, recycle efficiency can be improved.

Still further, in the present embodiment, each vacuum insulation panel 10 is adhered to the inner surface of the outer casing 2 via the adhesive 11. The outer periphery of the vacuum insulation panel 10 along edges of the core material part 12 of the vacuum insulation panel 10 is firmly adhered to the inner surface of the outer casing 2 via the adhesive 11 to prevent an occurrence of the following situation: when an adhesion surface of the inner surface of the outer casing 2 to which the vacuum insulation panel 10 is to be adhered, and a central portion of the vacuum insulation panel 10 away from the edges of the core material part 12 of the vacuum insulation panel 10 by a predetermined width or more, are not adhered together, the foam insulating material 4 enters a gap between the adhesion surface and the central portion of the vacuum insulation panel 10. Accordingly, the vacuum insulation panel 10 can be collected more easily without damaging the vacuum insulation panel 10 as compared to the following cases: a case where the vacuum insulation panel 10 is embedded within the foam insulating material 4 at a position near the middle between the outer casing 2 and the inner casing 3; and a case where almost one entire surface of the core material part 12 of the vacuum insulation panel 10 is adhered to the inner surface of the outer casing 2 or the outer surface of the inner casing 3 via the adhesive 11. In addition, external deformation of the outer casing 2 of the heat-insulating box 1 can be suppressed by preventing the foam insulating material 4 from entering a gap between the adhesion surface of the outer casing 2, to which the vacuum insulation panel 10 is to be adhered, and the central portion of the vacuum insulation panel 10.

Still further, in the present embodiment, a hot melt adhesive or a thermal expansion adhesive is applied as the adhesive 11. The adhesive 11 is applied in a dot-like manner or in both a dot-like manner and linear manner. The adhesive 11 is used for affixing the vacuum insulation panel 10 to the inner surface of the outer casing 2 or the outer surface of the inner casing 3 to temporarily fix the vacuum insulation panel 10 until the foam insulating material 4 forms and fills the intended space. The area of the application of the adhesive 11 is less than or equal to 10 (%) of the area of one surface of the core material part 12 of the vacuum insulation panel 10. In this manner, the amount of adhesive 11 to be applied is kept to a minimum necessary, which makes it possible to readily release the vacuum insulation panel 10 from the outer casing 2 or the inner casing 3, and thus the vacuum insulation panel 10 can be removed without being broken.

In particular, a thermal expansion adhesive is known to have such a property that after the adhesive has expanded under a high temperature and the adhesive strength is lost, when the adhesive is cooled down to a normal temperature, the expanded state of the adhesive is still maintained. Accordingly, in a case where a thermal expansion adhesive is applied as the adhesive 11, under a normal temperature, the vacuum insulation panel 10 can be readily removed from the outer casing 2 or the inner casing 3, to which the vacuum insulation panel 10 is adhered.

As described above, the present embodiment provides the heat-insulating box 1 having the following features: during the use of the heat-insulating box 1, the heat insulating performance of the heat-insulating box 1 can be maintained for a long term; and at the time of disposal of the used heat-insulating box 1, each vacuum insulation panel 10 can be readily collected from the heat-insulating box 1. In particular, the vacuum insulation panel 10 of the heat-insulating box 1 according to the present embodiment is capable of maintaining its decompressed state for a long term and maintaining its high heat insulating performance for a long term. Accordingly, when the vacuum insulation panel 10 is removed from the used heat-insulating box 1, if there is no particular problem regarding the heat insulating performance of the vacuum insulation panel 10, then the vacuum insulation panel 10 can be reused as it is.

Although Fig. 1 and Fig. 2 show an example where each vacuum insulation panel 10 is adhered to the inner surface of the outer casing 2, each vacuum insulation panel 10 may alternatively be adhered to the outer surface of the inner casing 3.

Not only glass wool but also an open-cell foam such as polyurethane or polystyrene, an inorganic fiber such as a ceramic fiber, an organic fiber such as a polyester fiber, and inorganic powder such as silica or pearlite are usable as the core material 8. Alternatively, a composite of these materials may be used as the core material 8.

The outer skin material 9 may be any material, so long as the material serves to maintain the degree of vacuum of the vacuum insulation panel. For example, as previously described, the outer skin material may be laminated films in which the following films are laminated together: a thermal bonding film serving as an innermost layer; a resin film which is a gas barrier film serving as a middle layer, on which a metal foil or metal atoms are vapor-deposited; and a surface protection film serving as an outermost layer. It should be noted that the thermal bonding film to be used is not particularly limited, but may be a thermoplastic resin film such as the previously-mentioned straight-chain low-density polyethylene film, a low-density polyethylene film, a high-density polyethylene film, a polypropylene film, or a polyacrylonitrile film, or may be a composite of these films. Examples of the gas barrier film include: the previously-mentioned aluminum foil; a metal foil other than the aluminum foil, such as a copper foil; a film obtained by vapor-depositing a metal such as aluminum or copper on a polyethylene terephthalate film or an ethylene-vinyl alcohol copolymer; a film obtained by vapor-depositing a metal oxide such as aluminum oxide or copper oxide on a polyethylene terephthalate film or an ethylene-vinyl alcohol copolymer; and a composite of these films (e.g., a combination of an aluminum vapor deposition film and an aluminum foil).

### (Embodiment 2)

### [Example of Structure of Gas Adsorbent]

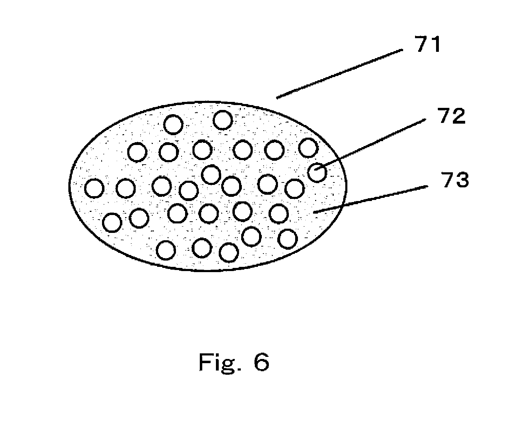

Fig. 6 is a schematic diagram of a gas adsorbent according to Embodiment 2 of the present invention, which is applied to a gas adsorbing device. A gas adsorbent 71 according to the present embodiment is applied to the gas adsorbing device 7 of Embodiment 1. The gas adsorbent 71 is used for maintaining a decompressed state of enclosed space by adsorbing air in the enclosed space. The gas adsorbent 71 includes: a copper-ion-exchanged ZSM-5 zeolite 72, in which a silica-alumina ratio in the zeolite framework is not less than 8 and not more than 25 and which is active in adsorbing nitrogen; and a chemical moisture adsorbent 73 formed in a manner to surround the copper-ion-exchanged ZSM-5 zeolite 72. It should be noted that the chemical moisture adsorbent 73 is more active in adsorbing water than the copper-ion-exchanged ZSM-5 zeolite 72.

It should be noted that the copper-ion-exchanged ZSM-5 zeolite 72, in which the silica-alumina ratio in the zeolite framework is not less than 8 and not more than 25, is prepared in a method described below.

First, a sodium-type zeolite in which a silica-alumina ratio in the ZSM-5 zeolite 72 framework is not less than 8 and not more than 25 is subjected to copper ion exchange. The copper ion exchange may be performed in a conventional known method. Commonly used methods involve immersing the sodium-type zeolite in an aqueous solution of a soluble copper salt such as a copper chloride solution or an ammino acid copper solution. Among such methods, if the ZSM-5 zeolite is prepared by a method using a carboxylate-containing Cu2+ solution such as a copper(II) propionate solution or a copper(II) acetate solution, or a method using a copper(II) nitrate solution, then the ZSM-5 zeolite has high nitrogen adsorption activity.

The copper ion exchange rate is desirably at least 50 (%) of the amount of exchangeable ions. After being subjected to the copper ion exchange, the ZSM-5 zeolite is sufficiently washed by water and dried, and thereafter subjected to suitable heat treatment under reduced pressure. As a result, Cu2+ introduced by the copper ion exchange is reduced to Cu1+. Consequently, nitrogen adsorbing capability is obtained. The heat treatment is performed under a pressure of 10 (mPa) or lower and preferably 1 (mPa) or lower at a temperature of 350 (°C) or higher and preferably 500 (°C) or higher.

The gas adsorbent 71 is formed in a method described below.

The heat-treated copper-ion-exchanged ZSM-5 zeolite 72, in which the silica-alumina ratio in the zeolite framework is not less than 8 and not more than 25 and which is active in adsorbing nitrogen, is mixed with the chemical moisture adsorbent 73 so as to be surrounded by the chemical moisture adsorbent 73 in an inert gas atmosphere such as Ar without coming into contact with nitrogen, water, and oxygen. Here, the chemical moisture adsorbent 73 to be selected for use is one that is more active against water than the previously obtained ZSM-5 zeolite 72 in which the copper ions have been replaced. The greater the difference in the degree of activity against water between the chemical moisture adsorbent 73 and the ZSM-5 zeolite 72, the better. From the practical standpoint, the difference is preferably twice or more. It should be noted that there is no toxicity information regarding the ZSM-5 zeolite supporting monovalent copper ions, and the ZSM-5 zeolite supporting monovalent copper ions is considered to be environmentally friendly.

According to the above structure, the chemical moisture adsorbent 73 surrounding the copper-ion-exchanged ZSM-5 zeolite 72 comes into contact with steam (moisture) before the copper-ion-exchanged ZSM-5 zeolite 72 does, thereby adsorbing and immobilizing the steam (moisture). As previously mentioned, the chemical moisture adsorbent 73 is more active in adsorbing water than the copper-ion-exchanged ZSM-5 zeolite 72. Accordingly, the amount of steam (moisture) that reaches the copper-ion-exchanged ZSM-5 zeolite 72 through gaps of the chemical moisture adsorbent 73 without being adsorbed by the chemical moisture adsorbent 73 is small. Therefore, the adsorption activity of the copper-ion-exchanged ZSM-5 zeolite 72 is not easily lost due to steam (moisture). Thus, decrease in the nitrogen adsorption activity of the copper-ion-exchanged ZSM-5 zeolite 72 can be suppressed. For these reasons, the gas adsorbent 71 according to the present embodiment has a high nitrogen adsorbing capacity.

### [Experiment Example of Gas Adsorbent]

First, a working example of the gas adsorbent 71 according to the present embodiment is described.

The copper-ion-exchanged ZSM-5 zeolite 72 in which the silica-alumina ratio is not less than 8 and not more than 25 and which has nitrogen adsorbing capability, and a calcium oxide serving as the chemical moisture adsorbent 73, were prepared, and the degrees of activity of the copper-ion-exchanged ZSM-5 zeolite 72 and the calcium oxide against water were measured. It should be noted that, as a method of measuring the degree of activity of the calcium oxide against water, 25 (g) of a calcium oxide sample was mixed in 1 (L) of hot water (containing a BTB indicator). Then, while the hot water was agitated, neutralization titration was performed by using a 4N hydrochloric acid aqueous solution. Thereafter, the amount of 4N hydrochloric acid aqueous solution consumed in 10 minutes was determined as the degree of activity of the calcium oxide against water. As a result, the degree of activity of the calcium oxide (hereinafter, referred to as a first calcium oxide for the sake of convenience of the description) was determined to be 223 (ml).

Meanwhile, the degree of activity of the copper-ion-exchanged ZSM-5 zeolite 72 against water cannot be measured by the same method. Therefore, changes in the humidity of the copper-ion-exchanged ZSM-5 zeolite 72 were measured in a desiccator, and compared with the degree of activity of the first calcium oxide against water. Specifically, the first calcium oxide was put in a desiccator that was adjusted to 95 (%RH); then, the first calcium oxide was left in the desiccator for ten minutes; and thereafter, the humidity became 4 (%RH). Similarly, the copper-ion-exchanged ZSM-5 zeolite 72 was put in a desiccator that was adjust to 95 (%RH); then the copper-ion-exchanged ZSM-5 zeolite 72 was left in the desiccator for ten minutes; and thereafter, the humidity became 12 (%).

Then, the first calcium oxide and the copper-ion-exchanged ZSM-5 zeolite 72 were mixed together in a mixture ratio of 9:1, and the gas adsorbent 71 obtained from the mixture was inserted into the outer skin material 9 formed of, for example, laminated films together with the core material 8 formed of, for example, glass wool (glass fiber). Then, an evacuation process was performed thereon until a chamber pressure became 1 (Pa), and thus the vacuum insulation panel 10 (hereinafter, referred to as a first vacuum insulation panel 10 for the sake of convenience of the description) was fabricated. The thermal conductivity of the first vacuum insulation panel 10 thus fabricated was 0.0017 (W/mK). The first vacuum insulation panel 10 in this state was left in an atmosphere at a temperature of 100 (°C). Then, after elapse of 200 days, the thermal conductivity of the first vacuum insulation panel 10 was measured, which was 0.0019 (W/mK).

Next, a comparative example of the gas adsorbent 71 according to the present embodiment is described.

A calcium oxide formed differently from the working example, whose degree of activity against water is 125 (ml) (hereinafter, referred to as a second calcium oxide for the sake of convenience of the description), was prepared. Then, similar to the working example, the second calcium oxide was left in a desiccator for ten minutes, and thereafter the humidity of the second calcium oxide was measured, which was 27 (%RH).

Then, the second calcium oxide and the copper-ion-exchanged ZSM-5 zeolite 72 were mixed together in a mixture ratio of 9:1, and a gas adsorbent obtained from the mixture was inserted into the outer skin material 9 formed of, for example, laminated films together with the core material 8 formed of, for example, glass wool (glass fiber). Then, an evacuation process was performed thereon until a chamber pressure became 1 (Pa), and thus a vacuum insulation panel (hereinafter, referred to as a second vacuum insulation panel for the sake of convenience of the description) was fabricated. The thermal conductivity of the second vacuum insulation panel was 0.0017 (W/mK). The second vacuum insulation panel in this state was also left in an atmosphere at a temperature of 100 (°C). Then, after elapse of 200 days, the thermal conductivity of the second vacuum insulation panel was measured, which was 0.0027 (W/mK).

From a comparison of the first vacuum insulation panel 10 of the working example and the second vacuum insulation panel of the comparative example, the following facts are obtained. In the working example, the degree of activity of the first calcium oxide against water is higher than the degree of activity of the copper-ion-exchanged ZSM-5 zeolite 72 against water. In the case of the working example, the thermal conductivity of the first vacuum insulation panel 10 after the elapse of 200 days shows almost no degradation from its initial thermal conductivity. On the other hand, in the comparative example, the degree of activity of the second calcium oxide against water is lower than the degree of activity of the copper-ion-exchanged ZSM-5 zeolite 72 against water, and the thermal conductivity of the second vacuum insulation panel after the elapse of 200 days shows 0.001 (W/mK) of degradation. The reason for this is considered as follows: over the period of 200 days, the first vacuum insulation panel 10 of the working example continued adsorbing air components entering from the outside; but at some point during the period of 200 days, the second vacuum insulation panel of the comparative example became unable to continue adsorbing air components entering from the outside.

### (Embodiment 3)

### [Example of Structure of Gas Adsorbing Device]

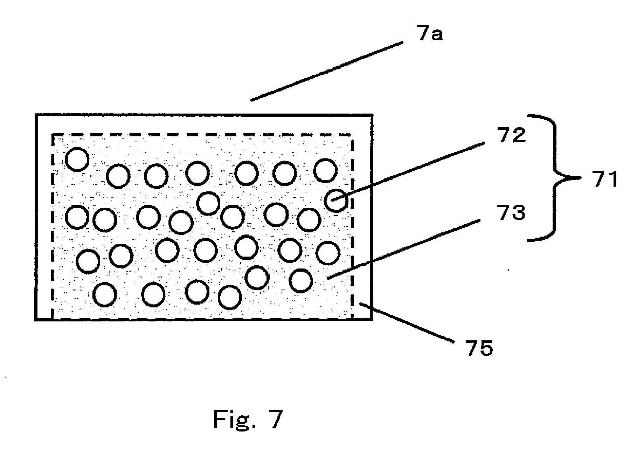

Fig. 7 is a schematic diagram of a gas adsorbing device according to Embodiment 3 of the present invention.

As shown in Fig. 7, a gas adsorbing device 7a according to the present embodiment is formed in the following manner: the gas adsorbent 71 including the copper-ion-exchanged ZSM-5 zeolite 72 and the chemical moisture adsorbent 73 according to Embodiment 2 is packed in a three-way sealed pouch 75 formed of a low-density polyethylene film having a thickness of 15 µm and suitable gas permeability; and an opening of the three-way sealed pouch 75 is sealed by heat sealing. It should be noted that, as shown in Fig. 4, the gas adsorbing device 7a is covered by the outer skin material 9 formed of, for example, gas barrier laminated films together with the core material 8 formed of, for example, glass wool (glass fiber). Then, the inside of the outer skin material 9 is decompressed, and thus the vacuum insulation panel 10 is formed.

According to the above structure, since the gas adsorbent 71 is packed in the three-way sealed pouch 75, the concentration of steam entering the three-way sealed pouch 75 over time is low, and almost all of the entering steam is selectively adsorbed by the chemical moisture adsorbent 73 and thus immobilized, which allows the copper-ion-exchanged ZSM-5 zeolite 72 to maintain high nitrogen adsorption activity for a long term. Consequently, the vacuum insulation panel 10 including the gas adsorbent 71 does not degrade for a long term.

Further, the copper-ion-exchanged ZSM-5 zeolite 72 in the gas adsorbent 71, in which the silica-alumina ratio in the zeolite framework is not less than 8 and not more than 25, is capable of adsorbing nitrogen that cannot be fully removed through an industrial evacuation process. This consequently makes it possible to improve the heat insulating performance of the vacuum insulation panel 10.

Still further, the gas adsorbent 71 is packed in the three-way sealed pouch 75 formed of the low-density polyethylene film having a thickness of 15 µm and suitable gas permeability. Therefore, there is not a risk that residual moisture flows into the gas adsorbent 71 at once.

Still further, in the gas adsorbent 71, the degree of activity of the chemical moisture adsorbent 73 against water is higher than the degree of activity of the copper-ion-exchanged ZSM-5 zeolite 72 against water. Accordingly, the amount of residual moisture that reaches the copper-ion-exchanged ZSM-5 zeolite 72 through the chemical moisture adsorbent 73 is significantly small, and decrease in the nitrogen adsorption performance of the copper-ion-exchanged ZSM-5 zeolite 72 can be suppressed.

It should be noted that the three-way sealed pouch 75 may be any kind of sealed pouch, so long as it is a sealed pouch having suitable gas permeability. For example, a low-density polyethylene film or a polypropylene film may be used as the three-way sealed pouch 75. Alternatively, holes may be formed in such a film so as to allow the entry of a trace amount of gas through the holes, and thereby gas barrier performance may be adjusted. Further alternatively, a non-woven fabric may be used as the sealed pouch. Examples of the non-woven fabric include: a non-woven fabric formed by heating and spreading a polyester fiber and a polypropylene fiber; and a non-woven fabric formed by span bonding. It should be noted that the film to be used can be selected in accordance with the amount of residual moisture. In a case where the amount of residual moisture is large, a film material with low steam permeability is selected. In a case where the amount of residual moisture is small, a film material with high steam permeability is selected. It is preferable to select a film such that the film has as high gas permeability as possible. The film's steam permeability and nitrogen permeability determine the gas barrier performance of the film. The thickness of the film may be set in accordance with the gas barrier performance to be obtained.

The chemical moisture adsorbent 73 may be placed in various ways. For example, the chemical moisture adsorbent 73 may be placed to be in contact with an outer shell, or may be placed in the middle of the core material 8. Among the various ways of placing the chemical moisture adsorbent 73, one preferable way is to place the chemical moisture adsorbent 73 in the middle of the core material 8.

### [Experiment Example of Gas Adsorbing Device]

Moisture permeability and nitrogen permeability of a low-density polyethylene film (three-way sealed pouch 75) under the conditions of 40 (°C) and 90 (%RH) were measured. The moisture permeability was 32 (g/m2), and the nitrogen permeability was 4700 (cc/m2·24H).

The vacuum insulation panel 10 to which the gas adsorbing device 7a according to the present embodiment is applied was fabricated in the same manner as in Embodiment 2. The initial thermal conductivity of the vacuum insulation panel 10 was measured, which was 0.0017 (W/mK). The vacuum insulation panel 10 was left under the condition of 100 °C for 200 days, and then the thermal conductivity of the vacuum insulation panel 10 was measured, which was still 0.0017 (W/mK). The reason for this is considered that, in the present embodiment, the copper-ion-exchanged ZSM-5 zeolite 72 is less easily degraded and more stably maintains its adsorption performance than in Embodiment 2.

### (Embodiment 4)

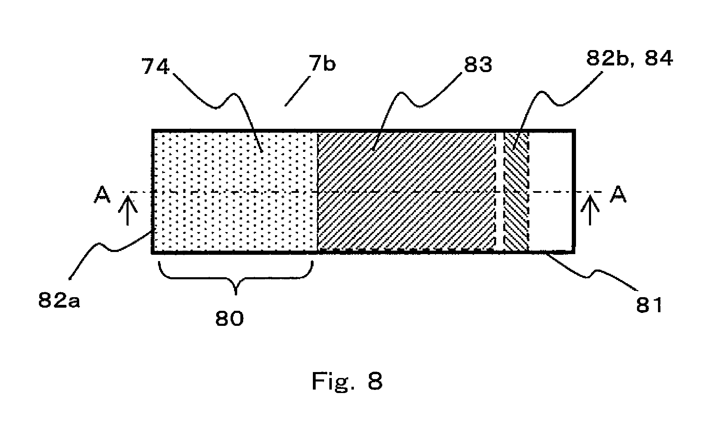

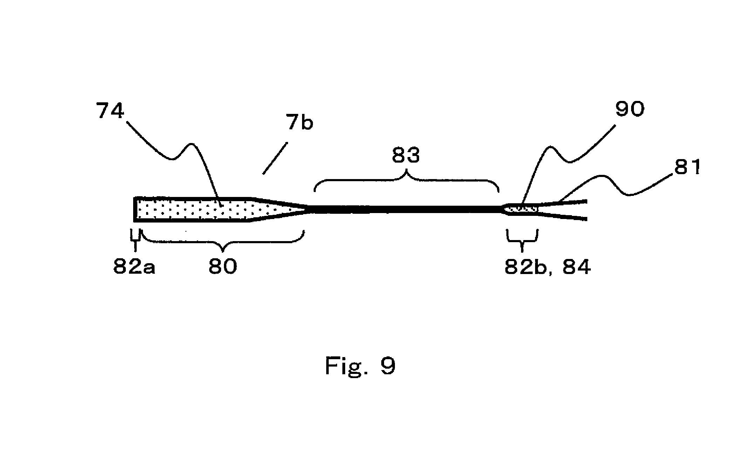

Fig. 8 is a plan view showing an example of the structure of a gas adsorbing device according to Embodiment 4 of the present invention. Fig. 9 is a cross-sectional view taken along line A-A in Fig. 8.

As shown in Fig. 8 and Fig. 9, a gas adsorbing device 7b according to the present embodiment includes: a gas adsorbing material 74 formed of a copper-ion-exchanged ZSM-5 zeolite; and a long and narrow flattened cylindrical aluminum storage container 81 storing the gas adsorbing material 74 in a decompressed state.

The storage container 81 includes: a storage portion 80 storing the gas adsorbing material 74; and sealed portions 82 positioned at both ends of the storage portion 80. Of the sealed portions 82 positioned at both ends of the storage portion 80, one sealed portion 82a serves as a bottom of the storage container 81, the bottom being obtained as a result of the storage container 81 being formed to have a closed-end cylindrical part through deep drawing, and the other sealed portion 82b is formed in the following manner: a narrowed portion 84, which is a portion where mutually facing inner surfaces of the storage container 81 are in close proximity with each other, is sealed by using sealing glass. It should be noted that, as described below in Embodiment 5, narrowed portions 84 may be formed at the sealed portions 82 positioned at both ends of the storage portion 80, and may be both sealed by using sealing glass.

The storage container 81 includes a closely contacting portion 83 positioned between the other sealed portion 82b and the storage portion 80. In the closely contacting portion 83, the mutually facing inner surfaces of the storage container 81 are in close contact with each other. It should be noted that, as shown in Fig. 9, the gas adsorbing device 7b is formed such that the two mutually facing flat surfaces of the storage container 81 are both recessed. Specifically, the closely contacting portion 83, the sealed portion 82b, and the storage portion 80 form the recesses, the bottoms of which are formed by the closely contacting portion 83. The sealed portion 82b and the storage portion 80 form edge portions of the recesses. The edge portions rise from the two flat surfaces of the closely contacting portion 83 (i.e., rise from the bottoms of the recesses) with a certain inclination relative to the thickness direction of the storage container 81. Alternatively, only one of the two facing flat surfaces of the storage container 81 may be recessed.

The gas adsorbing device 7b is formed such that the closely contacting portion 83 expands when the inner space of the storage container 81 communicates with the outside of the storage container 81 (i.e., when the gas adsorbing device 7b is opened).

The above gas adsorbing device 7b is fabricated in a method described below.

Specifically, the method of fabricating the gas adsorbing device 7b includes the steps of: storing the gas adsorbing material 74 in the storage container 81; forming the closely contacting portion 83 and the narrowed portion 84 with external force; placing sealing glass between inner surfaces (of the narrowed portion 84) of the storage container 81, the inner surfaces serving as the other sealed portion 82b; and putting and heat-treating the storage container 81 in a vacuum heating furnace. In particular, the heat treatment step specifically includes the steps of: activating the gas adsorbing material 74; melting the sealing glass under reduced pressure; solidifying the sealing glass by slowly cooling down the heating furnace; and annealing the storage container.

It should be noted that, the above fabrication method preferably includes the step of adjusting the flatness and thickness of the storage container 81 at the time of deep-drawing so that the closely contacting portion 83 will be formed between the storage portion 80 and the other sealed portion 82b at the narrowed portion 84 side owing to a difference between the internal and external pressures of the storage container 81.

Moreover, the above fabrication method preferably includes the step of adjusting the volume of the storage container 81 between the one sealed portion 82a and the narrowed portion 84 before the narrowed portion 84 is sealed, such that the volume is sufficiently large relative to the amount (volume) of the gas adsorbing material 74 stored in the storage container 81.

It should be noted that, from the standpoint of improving the gas adsorption effect, the more the amount of gas adsorbing material 74, the better. However, in the heat treatment in the vacuum heating furnace, gas is released from the gas adsorbing material 74 within the storage container 81. Therefore, if the amount of gas adsorbing material 74 is excessively large, the internal pressure of the storage container 81 increases due to the released gas. This makes it difficult to seal the storage container 81. In addition, there is a risk that the sealing material placed at the narrowed portion 84 is displaced due to the force of the released gas, which may result in a situation where the narrowed portion 84 cannot be properly sealed by the sealing material. Therefore, the proportion of the amount of gas adsorbing material 74 to the volume of a portion of the storage container 81, the portion being positioned inward from the narrowed portion 84 (in other words, the dimensional ratio between the storage portion 80 and the closely contacting portion 83), needs to be suitably set. In the present embodiment, the ratio between the length of the closely contacting portion 83 and the length of the storage portion 80 is set to approximately 1:1.

Further, the above fabrication method preferably includes the step of vertically placing the storage container 81, such that the longitudinal direction of the storage container 81 is in the vertical direction and the other sealed portion 82b is positioned above the one sealed portion 82a during a period from when the storage container 81 is put in the vacuum heating furnace to when the sealing glass is solidified and the external pressure of the storage container 81 is brought back to the atmospheric pressure.

According to the gas adsorbing device 7b fabricated through the above fabrication method, since the gas adsorbing device 7b includes the closely contacting portion 83, the powdery gas adsorbing material 74 stored in the storage portion 80 is prevented from being scattered when the other sealed portion 82b is opened. Therefore, recyclability of the vacuum insulation panel 10 at the time of disposal of the used heat-insulating box is improved.

### (Embodiment 5)

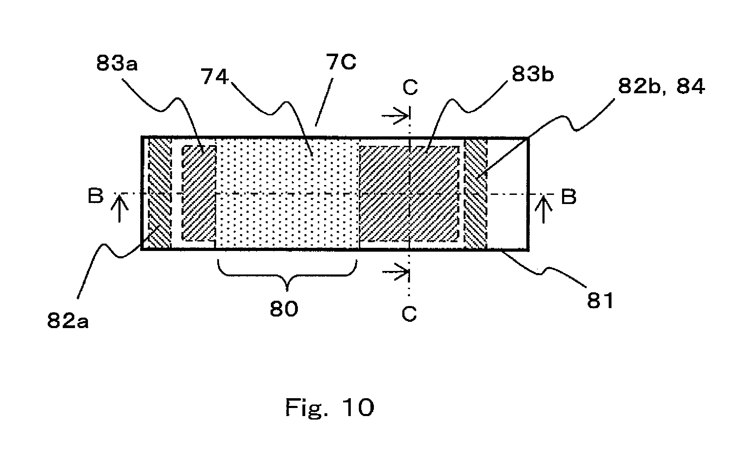

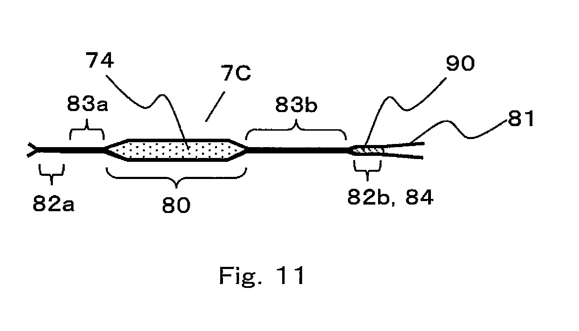

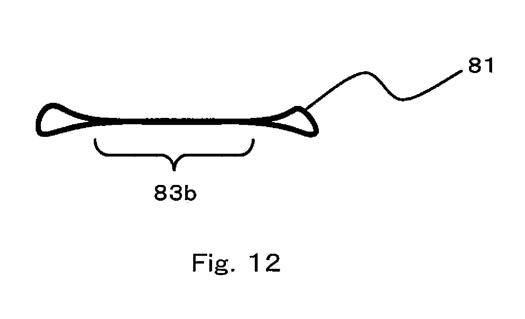

Fig. 10 is a plan view showing an example of the structure of a gas adsorbing device according to Embodiment 2 of the present invention. Fig. 11 is a cross-sectional view taken along line B-B in Fig. 10. Fig. 12 is a cross-sectional view taken along line C-C in Fig. 10.

As shown in Fig. 10 to Fig. 12, a gas adsorbing device 7c according to the present embodiment includes: the gas adsorbing material 74 formed of a copper-ion-exchanged ZSM-5 zeolite; and the long and narrow flattened cylindrical aluminum storage container 81 storing the gas adsorbing material 74 in the storage portion 80 in a decompressed state, the storage portion 80 having both ends sealed.

Of the sealed portions 82 positioned at both ends of the storage portion 80, one sealed portion 82a is formed by bringing the mutually facing inner surfaces of the storage container 81 into close proximity to each other and then sealing them together by ultrasonic welding, and the other sealed portion 82b is, similar to Embodiment 1, formed in the following manner: the narrowed portion 84, which is a portion where the mutually facing inner surfaces of the storage container 81 are in close proximity with each other, is sealed by sealing glass.

A closely contacting portion 83a where the mutually facing inner surfaces of the storage container 81 are in close contact with each other is formed between the sealed portion 82a and the storage portion 80, and also, a closely contacting portion 83b where the mutually facing inner surfaces of the storage container 81 are in close contact with each other is formed between the sealed portion 82b and the storage portion 80. Similar to Embodiment 4, as shown in Fig. 11, the two mutually facing flat surfaces of the storage container 81 are both recessed. Moreover, as shown in Fig. 12, if the closely contacting portion 83a or 83b is cut along a plane perpendicular to the longitudinal direction of the storage container 81, the cut section shows a recess. The gas adsorbing device 7b is formed such that the closely contacting portions 83a and 83b expand when the inner space of the storage container 81 communicates with the outside of the storage container 81 (i.e., when the gas adsorbing device 7b is opened).

The gas adsorbing device 7c is fabricated in a method described below. First, one end of the storage container 81 is sealed by ultrasonic welding. Then, a portion between the one sealed portion 82a and the storage portion 80, the portion being to be made into the closely contacting portion 83a, is caused to be in a closely contacting state by external force, so that the closely contacting portion 83a is formed between the one sealed portion 82a at the one end sealed by the ultrasonic welding and the storage portion 80 for storing the gas adsorbing material 74. Next, the gas adsorbing material 74 is stored in the storage container 81. Subsequently, the narrowed portion 84 is formed in order to form the other sealed portion 82b. Thereafter, sealing glass is placed between inner surfaces of the storage container 81, the inner surfaces being to be made into the other sealed portion 82b, and the storage container 81 is put and heat-treated in a vacuum heating furnace. It should be noted that, similar to Embodiment 4, the heat treatment step of the gas adsorbing device 7c includes the steps of: activating the gas adsorbing material 74; melting the sealing glass under reduced pressure; solidifying the sealing glass by slowing cooling down the heating furnace; and annealing the storage container.

It should be noted that the above fabrication method preferably includes the step of adjusting the flatness and thickness of the storage container 81 so that the closely contacting portion 83b will be formed between the storage portion 80 and the other sealed portion 82b at the narrowed portion 84 side owing to a difference between the internal and external pressures of the storage container 81.

In addition to the above flatness and thickness adjusting step, the fabrication method preferably includes the step of adjusting the volume of the storage container 81 between the narrowed portion 84 and the closely contacting portion 83a at the one sealed portion 82a side sealed by the ultrasonic welding, such that the volume is sufficiently large relative to the amount (volume) of the gas adsorbing material 74 stored in the storage container 81.

Further, the above fabrication method preferably includes the step of vertically placing the storage container 81, such that the longitudinal direction of the storage container 81 is in the vertical direction and the other sealed portion 82b at the narrowed portion 84 side is positioned above the one sealed portion 82a sealed by the ultrasonic welding during a period from when the storage container 81 is put in the vacuum heating furnace to when the sealing glass is solidified and the external pressure of the storage container 81 is brought back to the atmospheric pressure.

According to the gas adsorbing device 7c fabricated through the above fabrication method, since the gas adsorbing device 7c includes the closely contacting portions 83, the powdery gas adsorbing material 74 stored in the storage portion 80 is prevented from being scattered when the other sealed portion 82b is opened. Therefore, recyclability of the vacuum insulation panel 10 at the time of disposal of the used heat-insulating box is improved.

From the foregoing description, numerous modifications and other embodiments of the present invention are obvious to one skilled in the art. Therefore, the foregoing description should be interpreted only as an example and is provided for the purpose of teaching the best mode for carrying out the present invention to one skilled in the art. The structural and/or functional details may be substantially altered without departing from the spirit of the present invention.

### Industrial Applicability

The heat-insulating box according to the present invention has the following features: during the use of the heat-insulating box, the heat insulating performance of the heat-insulating box can be maintained for a long term, and at the time of disposal of the used heat-insulating box, each vacuum insulation panel can be readily collected from the heat-insulating box. Therefore, the heat-insulating box according to the present embodiment is applicable to, for example, refrigerators, vending machines, hot water supply containers, heat insulating materials for use in building construction, heat insulating materials for use in automobiles, cooler boxes, and heat-retention boxes.

### Reference Signs List

10 vacuum insulation panel
11 adhesive
12 core material part
2 outer casing
3 inner casing
4 foam insulating material
5 swing door
6 moisture adsorbent
7, 7a, 7b, 7c gas adsorbing device
71 gas adsorbent
72 copper-ion-exchanged ZSM-5 zeolite
73 chemical moisture adsorbent
74 gas adsorbing material
75 three-way sealed pouch
8 core material
80 storage portion
81 storage container
82, 82a, 82b sealed portion
83, 83a, 83b closely contacting portion
84 narrowed portion
9 outer skin material
100 refrigerator
20 refrigerator compartment
21 upper freezer compartment
22 ice compartment
23 vegetable compartment
24 lower freezer compartment

## Claims

1. A heat-insulating box comprising:
an outer casing;
an inner casing accommodated in the outer casing, such that heat insulating space is formed between the inner casing and an inner surface of the outer casing;
a plurality of vacuum insulation panels arranged in the heat insulating space; and
a foam insulating material which fills space in the heat insulating space other than the plurality of vacuum insulation panels, wherein
each of the plurality of vacuum insulation panels includes at least a core material and a moisture adsorbent, and the core material and the moisture adsorbent are decompression-sealed in space covered by an outer skin material, and
among the plurality of vacuum insulation panels, at least a vacuum insulation panel having a largest area includes a gas adsorbing device in addition to the core material and the moisture adsorbent, the gas adsorbing device having nitrogen adsorbing capability and moisture adsorbing capability, and the core material, the moisture adsorbent, and the gas adsorbing device are decompression-sealed in the space covered by the outer skin material.

2. The heat-insulating box according to claim 1, wherein
the gas adsorbing device includes:
a powdery gas adsorbing material having nitrogen adsorbing capability and moisture adsorbing capability; and
a storage container configured to store the gas adsorbing material, and the storage container and the core material are held in the space covered by the outer skin material not via an adhesive but via decompression sealing.

3. The heat-insulating box according to claim 1 or claim 2, wherein
each vacuum insulation panel is adhered to the inner surface of the outer casing or an outer surface of the inner casing via an adhesive, and
an outer periphery of the vacuum insulation panel along edges of a core material part of the vacuum insulation panel is firmly adhered to the inner surface of the outer casing or the outer surface of the inner casing via the adhesive to prevent an occurrence of the following situation: when an adhesion surface of the inner surface of the outer casing or the outer surface of the inner casing to which the vacuum insulation panel is to be adhered, and a central portion of the vacuum insulation panel away from the edges of the core material part of the vacuum insulation panel by a predetermined width or more, are not adhered together, the foam insulating material enters a gap between the adhesion surface and the central portion of the vacuum insulation panel.

4. The heat-insulating box according to claim 3, wherein the adhesive is a thermal expansion adhesive.

5. The heat-insulating box according to claim 1, wherein
the gas adsorbing device includes:
a gas adsorbent having nitrogen adsorbing capability and moisture adsorbing capability; and
a sealed pouch in which the gas adsorbent is packed, the sealed pouch having gas permeability, and
the gas adsorbent includes:
a copper-ion-exchanged ZSM-5 zeolite in which a silica-alumina ratio in a zeolite framework is not less than 8 and not more than 25; and
a chemical moisture adsorbent surrounding the copper-ion-exchanged ZSM-5 zeolite, the chemical moisture adsorbent being more active in adsorbing water than the copper-ion-exchanged ZSM-5 zeolite.

6. The heat-insulating box according to claim 1, wherein
the gas adsorbing device includes:
a gas adsorbing material having nitrogen adsorbing capability and moisture adsorbing capability; and
a long and narrow flattened cylindrical metal storage container storing the gas adsorbing material in a decompressed state, the storage container including a storage portion and sealed portions positioned at both ends of the storage portion, and
a closely contacting portion where mutually facing inner surfaces of the storage container are in close contact with each other is formed between the storage portion and at least one of the sealed portions of the storage container.
